# EUROPEAN PATENT APPLICATION

(11) **EP 4 642 105 A1**
(43) Date of publication of application: **29.10.2025**
(21) Application number: 23917226.5
(22) Date of filing: 29.11.2023
(51) Int. Cl.: H04W 52/02

(54) **COMMUNICATION METHOD, TERMINAL DEVICE, AND NETWORK DEVICE**

(30) Priority: 18.01.2023 CN 202310201134; 24.02.2023 CN 202310209395
(71) Applicant: Huawei Technologies Co., Ltd., Shenzhen, Guangdong 518129 (CN)
(72) Inventor: KUANG, Yiru, Shenzhen, Guangdong 518129 (CN); XUE, Yifan, Shenzhen, Guangdong 518129 (CN); XU, Haibo, Shenzhen, Guangdong 518129 (CN); XUE, Lixia, Shenzhen, Guangdong 518129 (CN)
(74) Representative: Goddar, Heinz J.
(86) International application number: PCT/CN2023/135239
(87) International publication number: WO 2024/152758

(57) **Abstract**

This application provides a communication method, a terminal device, and a network device, and relates to the field of wireless communication technologies. In this application, power consumption can be reduced. The method is applied to a terminal device in a connected state, and includes: The terminal device monitors a wake up signal WUS from a network device over a first link in inactive time of the terminal device. If the WUS is detected, the terminal device monitors a physical downlink control channel PDCCH from the network device over a second link in active time of the terminal device. Power consumption of the terminal device operating on the first link is less than power consumption of the terminal device operating on the second link. The first link may be a wake up radio WUR link, and the second link may be a main link.

## Description

This application claims priorities to Chinese Patent Application No. 202310201134.9, filed with the China National Intellectual Property Administration on January 18, 2023 and entitled "METHOD FOR SUPPORTING LP-WUS IN CONNECTED STATE, TERMINAL DEVICE, NETWORK DEVICE, AND COMMUNICATION SYSTEM", and to Chinese Patent Application No. 202310209395.5, filed with the China National Intellectual Property Administration on February 24, 2023 and entitled "COMMUNICATION METHOD, TERMINAL DEVICE, AND NETWORK DEVICE", both of which are incorporated herein by reference in their entireties.

### TECHNICAL FIELD

This application relates to the field of wireless communication, and in particular, to a communication method, a terminal device, and a network device.

### BACKGROUND

In a wireless communication system, if a terminal device is in a connected state, the terminal device operates on a main link, and the terminal device receives data over the main link. However, the terminal device operating on the main link brings power consumption and high energy overheads.

### SUMMARY

To resolve the foregoing technical problem, this application provides a communication method, a terminal device, and a network device, to reduce power consumption of the terminal device. To achieve the foregoing objective, this application uses the following technical solutions.

According to a first aspect, a communication method is provided. The method may be performed by a terminal device, or may be performed by a chip used in the terminal device. The terminal device is in a connected state. The following uses an example in which the method is performed by the terminal device for description. The communication method includes the following steps.

The terminal device monitors a wake up signal, WUS, from a network device over a first link in inactive time of the terminal device.

If detecting the WUS,
the terminal device monitors a physical downlink control channel PDCCH from the network device over a second link in active time of the terminal device.

Power consumption of the terminal device operating on the first link is less than power consumption of the terminal device operating on the second link.

That power consumption of the terminal device operating on the first link is less than power consumption of the terminal device operating on the second link means that in unit duration, the power consumption of the terminal device operating on the first link is less than the power consumption of the terminal device operating on the second link.

For example, the first link is a WUR link, and the second link is a main link.

In other words, in a period in which the terminal device monitors the WUS from the network device over the first link, the second link of the terminal device does not operate.

In this way, because the power consumption of the terminal device operating on the first link is less than the power consumption of the terminal device operating on the second link, in comparison with a case in which the terminal device monitors the WUS and the PDCCH from the network device over the second link, power consumption of the terminal device can be reduced in this application.

In addition, when the network device has downlink information to be sent to the terminal device, the network device sends the WUS over the first link, to wake up the terminal device in time. This helps ensure a data transmission delay requirement. In this way, in this application, the power consumption of the terminal device can be reduced while the data transmission delay requirement is ensured.

In a possible design, if the WUS is detected, before the PDCCH from the network device is monitored over the second link, the method further includes: The terminal device switches from the first link to the second link.

In other words, if the WUS is detected, the terminal device switches from the first link to the second link, to monitor the PDCCH over the second link in time.

In a possible design, the method further includes: If the active time of the terminal device ends, the terminal device switches from the second link to the first link.

That the active time of the terminal device ends may be understood as that the terminal device enters the inactive time of the terminal device. That is, the inactive time of the terminal device is started.

The network device sends the WUS to the terminal device over the first link in the inactive time of the terminal device. Correspondingly, the terminal device monitors the WUS from the network device over the first link, to reduce the power consumption for monitoring the WUS by the terminal device.

In a possible design, the method further includes: If detecting the WUS, the terminal device starts or restarts a first timer.

The active time of the terminal device includes running time of the first timer, and the first timer includes an inactivity timer or an on duration timer.

In other words, a trigger condition for starting (or restarting) the first timer includes: The terminal device detects the WUS. The first timer is started (or restarted), to indicate that the terminal device enters the active time of the terminal device.

In a possible design, the first timer includes the inactivity timer, and starting (or restarting) the first timer includes: If detecting the WUS in a first time unit, the terminal device starts (or restarts) the inactivity timer in a second time unit.

The first time unit is earlier than the second time unit, and the second time unit meets one of the following:

There is an interval of first duration between the second time unit and the first time unit;
the second time unit is an initial time unit after the first time unit;
the second time unit is an initial time unit that is indicated by a preconfigured index and that is after the first time unit; or
the second time unit is a time unit indicated by the WUS.

In this way, the network device and the terminal device can align a time point at which the inactivity timer is started (or restarted).

In a possible design, the first timer includes the on duration timer, and starting or restarting the first timer includes: If detecting the WUS in a first time unit, the terminal device starts or restarts the on duration timer in a third time unit.

The first time unit is earlier than the third time unit, and there is an interval of second duration between the third time unit and the first time unit.

In this way, the network device and the terminal device can align a time point at which the on duration timer is started (or restarted).

In a possible design, the third time unit is a time unit in which an on duration start position is located in a discontinuous reception DRX cycle.

In a possible design, the active time of the terminal device includes a time period corresponding to a random access response window ra-ResponseWindow, so that the terminal device monitors the PDCCH from the network device in a running period of the ra-ResponseWindow.

In a possible design, monitoring the WUS from the network device over the first link includes: If a signal quality measurement result of a first signal is greater than or equal to a first threshold, the terminal device monitors the WUS from the network device over the first link.

The signal quality measurement result includes a result of signal quality measurement performed on the first signal over the first link or the second link.

In other words, the terminal device monitors the WUS over the first link only when determining that communication performance of the first link meets a requirement (for example, the signal quality measurement result of the first signal is greater than or equal to the first threshold), to ensure signal monitoring performance.

In a possible design, after the PDCCH from the network device is monitored over the second link, the method further includes:

If it is determined that the terminal device is to switch from the second link to the first link, and then is to switch from the first link back to the second link, and duration of remaining on the first link is less than or equal to a second threshold, the terminal device no longer switches from the second link to the first link, and still operates on the second link, to simplify processing of the terminal device.

In a possible design, before the WUS from the network device is monitored over the first link, the method further includes: The terminal device receives WUS configuration information from the network device.

For example, the terminal device receives the WUS configuration information from the network device over the second link.

The WUS configuration information indicates the terminal device to monitor the WUS over the first link.

In a possible design, monitoring the WUS from the network device over the first link includes: If a first condition is met, the terminal device monitors the WUS from the network device over the first link.

The first condition includes: Discontinuous reception DRX configuration information and the WUS configuration information from the network device are received, to trigger the terminal device to monitor the WUS over the first link.

In a possible design, after the DRX configuration information from the network device is received, and before the WUS from the network device is monitored over the first link, if it is detected that the WUS is used to start or restart the inactivity timer, the method further includes:

The terminal device ignores a first configuration, or determines that the first configuration is invalid.

The first configuration is included in a configuration indicated by the DRX configuration information to the terminal device, and the first configuration includes at least one of the following: the DRX cycle or running duration of the on duration timer.

In other words, the terminal device no longer controls a running status of the inactivity timer based on the DRX cycle or the running duration of the on duration timer, and may start or restart the inactivity timer based on whether the terminal device detects the WUS.

In a possible design, monitoring the WUS from the network device over the first link includes: If a second condition is met, the terminal device monitors the WUS from the network device over the first link.

The second condition includes the following two items:
in a first item, downlink control information with cyclic redundancy code scrambled by power saving radio network temporary identifier DCP configuration information and the WUS configuration information from the network device are received, where the DCP configuration information indicates a DCP configuration to the terminal device, and the WUS configuration information indicates a WUS configuration to the terminal device; and
in a second item, a priority of the DCP configuration is lower than a priority of the WUS configuration.

In this way, the terminal device can perform a WUS mechanism with a higher priority, that is, monitor the WUS over the first link.

A full name of DCP in English is DCI with CRC scrambled by PS-RNTI, a full name of the DCI in English is downlink control information, a full name of the CRC in English is cyclic redundancy code, a full name of the PS-RNTI in English is power saving-RNTI, and a full name of the RNTI in English is radio network temporary identifier.

In a possible design, the method further includes: The terminal device receives DCP configuration information from the network device over the second link.

The DCP configuration information is used to monitor the DCP over the second link.

The DCP is used to wake up the terminal device, and the WUS is used to wake up a terminal device group to which the terminal device belongs.

In other words, if both the DCP and the WUS indicate wakeup, the terminal device determines that the terminal device is a terminal device woken up by the network device.

In a possible design, if the WUS is detected, after it is determined that switching from the first link to the second link is performed, and before the first timer is started or restarted, the method further includes: The terminal device monitors, based on the DCP configuration information, the DCP over the second link.

In other words, if the DCP indicates wakeup, the terminal device starts the first timer, to indicate that the terminal device enters the active time of the terminal device.

In a possible design, after switching from the second link to the first link, the method includes: The terminal device switches from the first link to the second link, and sends uplink information over the second link.

For example, if the terminal device has uplink information to be sent, the terminal device switches from the first link to the second link, and sends the uplink information over the second link.

In other words, if the terminal device operates on the first link and the second link does not operate, when the terminal device needs to send the uplink information, the terminal device may perform link switching, to switch to the second link, and then send the uplink information over the second link, to implement an uplink sending function.

According to a second aspect, a communication method is provided. The method may be performed by a terminal device, or may be performed by a chip used in the terminal device. The terminal device is in a connected state. The following uses an example in which the method is performed by the terminal device for description. The communication method includes the following steps.

The terminal device switches from a first link to a second link, and sends uplink information over the second link.

For example, if the terminal device has uplink information to be sent, the terminal device switches from the first link to the second link, and sends the uplink information over the second link.

In other words, if the terminal device operates on the first link and the second link does not operate, when the terminal device needs to send the uplink information, the terminal device may perform link switching, to switch to the second link, and then send the uplink information over the second link, to implement an uplink sending function.

In a possible design, when the uplink information includes a random access preamble, and after the uplink information is sent over the second link, the method further includes:

The terminal device monitors a PDCCH from a network device over the second link in active time of the terminal device.

The active time of the terminal device includes a time period corresponding to a random access response window ra-ResponseWindow, so that the terminal device monitors the PDCCH from the network device in a running period of the ra-ResponseWindow, to complete random access.

According to a third aspect, a communication method is provided. The method may be performed by a network device, or may be performed by a chip used in the network device. The following uses an example in which the method is performed by the network device for description. The communication method includes the following steps.

The network device sends a wake up signal WUS to a terminal device over a first link in inactive time of the terminal device.

The network device sends a physical downlink control channel PDCCH to the terminal device over a second link in active time of the terminal device.

The terminal device is in a radio resource control RRC connected state, and power consumption of the terminal device operating on the first link is less than power consumption of the terminal device operating on the second link.

That power consumption of the terminal device operating on the first link is less than power consumption of the terminal device operating on the second link means that in unit duration, the power consumption of the terminal device operating on the first link is less than the power consumption of the terminal device operating on the second link.

For example, the first link is a WUR link, and the second link is a main link.

In other words, the network device sends the WUS to the terminal device over the first link, so that the terminal device monitors the WUS from the network device over the first link. In this period, the terminal device does not operate on the second link.

In this way, because the power consumption of the terminal device operating on the first link is less than the power consumption of the terminal device operating on the second link, in comparison with a case in which the terminal device monitors the WUS and the PDCCH from the network device over the second link, power consumption of the terminal device can be reduced in this application.

In addition, when the network device has downlink information to be sent to the terminal device, the network device sends the WUS over the first link, to wake up the terminal device in time. This helps ensure a data transmission delay requirement. In this way, in this application, the power consumption of the terminal device can be reduced while the data transmission delay requirement is ensured.

In a possible design, after the WUS is sent to the terminal device over the first link, and before the PDCCH is sent to the terminal device over the second link, the method further includes: The network device determines that the terminal device switches from the first link to the second link, to send the PDCCH to the terminal device over the second link, and ensure that the terminal device can successfully receive the PDCCH.

In a possible design, the method further includes: If the active time of the terminal device ends, the network device determines that the terminal device switches from the second link to the first link, and then sends the WUS to the terminal device over the first link, to reduce the power consumption of the terminal device.

In a possible design, the active time of the terminal device includes a time period corresponding to a random access response window ra-ResponseWindow.

In this way, the network device may send the PDCCH to the terminal device in a running period of the ra-ResponseWindow, so that the terminal device monitors the PDCCH from the network device in the running period of the ra-ResponseWindow.

In a possible design, after the PDCCH is sent to the terminal device over the second link, the method further includes: If it is determined that the terminal device is to switch from the second link to the first link, and then is to switch from the first link back to the second link, and duration of remaining on the first link is less than or equal to a second threshold, the network device determines that the terminal device no longer switches from the second link to the first link, and that the terminal device still operates on the second link.

In this way, if the network device sends the downlink information to the terminal device, the network device sends the downlink information to the terminal device over the second link.

In a possible design, before the WUS is sent to the terminal device over the first link, the method further includes: The network device sends WUS configuration information to the terminal device.

The WUS configuration information indicates the terminal device to monitor the WUS over the first link.

In a possible design, the method further includes: The network device sends downlink control information with cyclic redundancy code scrambled by power saving radio network temporary identifier DCP configuration information to the terminal device over the second link.

The DCP configuration information indicates a DCP configuration to the terminal device, and the WUS configuration information indicates a WUS configuration to the terminal device. A priority of the DCP configuration is lower than a priority of the WUS configuration.

In this way, because the priority of the DCP configuration is lower than the priority of the WUS configuration, the network device and the terminal device perform a configuration with a higher priority, that is, the WUS configuration. In other words, the network device sends the WUS to the terminal device over the first link. Correspondingly, the terminal device monitors the WUS from the network device over the first link.

In a possible design, the method further includes: The network device sends DCP configuration information to the terminal device over the second link.

The DCP configuration information is used by the terminal device to monitor DCP.

The DCP is used to wake up the terminal device, and the WUS is used to wake up a terminal device group to which the terminal device belongs.

In this way, the network device indicates, by using the DCP and the WUS, a terminal device to be woken up in the terminal device group.

According to a fourth aspect, a terminal device is provided. The terminal device includes a processor and a memory, the processor is coupled to the memory, the memory stores program instructions, and when the program instructions stored in the memory are executed by the processor, the terminal device is enabled to perform the method in any one of the first aspect or the possible designs of the first aspect, or the terminal device is enabled to perform the method in any one of the second aspect or the possible designs of the second aspect.

According to a fifth aspect, a network device is provided. The network device includes a processor and a memory, the processor is coupled to the memory, the memory stores program instructions, and when the program instructions stored in the memory are executed by the processor, the network device is enabled to perform the method in any one of the third aspect or the possible designs of the third aspect.

According to a sixth aspect, a chip is provided. The chip includes a processor and a memory coupled to the processor, the memory stores a computer program, the chip is located in a terminal device, and when the processor executes the computer program, the terminal device is enabled to perform the method in any one of the first aspect or the possible designs of the first aspect, or the terminal device is enabled to perform the method in any one of the second aspect or the possible designs of the second aspect.

According to a seventh aspect, a chip is provided. The chip includes a processor and a memory coupled to the processor, the memory stores a computer program, the chip is located in a network device, and when the processor executes the computer program, the network device is enabled to perform the method in any one of the third aspect or the possible designs of the third aspect.

According to an eighth aspect, a computer-readable storage medium is provided. The computer-readable storage medium stores a computer program or instructions, and when the computer program or the instructions are executed on a terminal device, the terminal device is enabled to perform the method in any one of the first aspect or the possible designs of the first aspect, or the terminal device is enabled to perform the method in any one of the second aspect or the possible designs of the second aspect.

According to a ninth aspect, a computer-readable storage medium is provided. The computer-readable storage medium stores a computer program or instructions, and when the computer program or the instructions are executed on a network device, the network device is enabled to perform the method in any one of the third aspect or the possible designs of the third aspect.

According to a tenth aspect, a computer program product including instructions is provided. When the computer program product runs on a computer, the computer is enabled to perform the method in any one of the foregoing aspects.

According to an eleventh aspect, a circuit system is provided. The circuit system includes a processing circuit, and the processing circuit is configured to perform the method in any one of the foregoing aspects.

According to a twelfth aspect, a communication system is provided, including a terminal device and a network device.

The terminal device is configured to perform the method in any one of the first aspect or the possible designs of the first aspect, and the network device is configured to perform the method in any one of the third aspect or the possible designs of the third aspect.

Alternatively, the terminal device is configured to perform the method in any one of the second aspect or the possible designs of the second aspect, and the network device receives uplink information from the terminal device over a second link.

For technical effects brought by any design of the fourth aspect to the twelfth aspect, refer to beneficial effects in the corresponding methods provided above. Details are not described herein again.

### BRIEF DESCRIPTION OF DRAWINGS

FIG. 1 is a diagram of an architecture of a communication system according to an embodiment of this application;
FIG. 2 is a diagram of a principle of an operating circuit according to an embodiment of this application;
FIG. 3 is a diagram of a configuration of a discontinuous reception mechanism according to an embodiment of this application;
FIG. 4 is a diagram of a configuration of another discontinuous reception mechanism according to an embodiment of this application;
FIG. 5 is a schematic flowchart of a communication method according to an embodiment of this application;
FIG. 6 is a diagram of a configuration of another discontinuous reception mechanism according to an embodiment of this application;
FIG. 7 is a schematic flowchart of another communication method according to an embodiment of this application;
FIG. 8 is a diagram of a configuration of another discontinuous reception mechanism according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application; and
FIG. 12 is a diagram of a structure of a communication apparatus according to an embodiment of this application.

### DESCRIPTION OF EMBODIMENTS

The following describes technical solutions in this application with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4^{th} generation (4^{th} generation, 4G) mobile communication system, for example, a long term evolution (long term evolution, LTE) system or a worldwide interoperability for microwave access (worldwide interoperability for microwave access, WiMAX) communication system, a 5^{th} generation (5^{th} generation, 5G) mobile communication system, for example, a new radio (new radio, NR) system, a 6^{th} generation (6^{th} generation, 6G) mobile communication system, and a communication system in an indoor commercial scenario. This is not specifically limited in embodiments of this application. Indoor commercial scenarios include scenarios such as screen projection from a terminal device (for example, a mobile phone) to a screen and a virtual reality (virtual reality, VR) game. In addition, the terms "system" and "network" may be interchanged.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "relevant (corresponding, relevant)", and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of new service scenarios, the technical solutions provided in embodiments of this application are also applicable to similar technical problems.

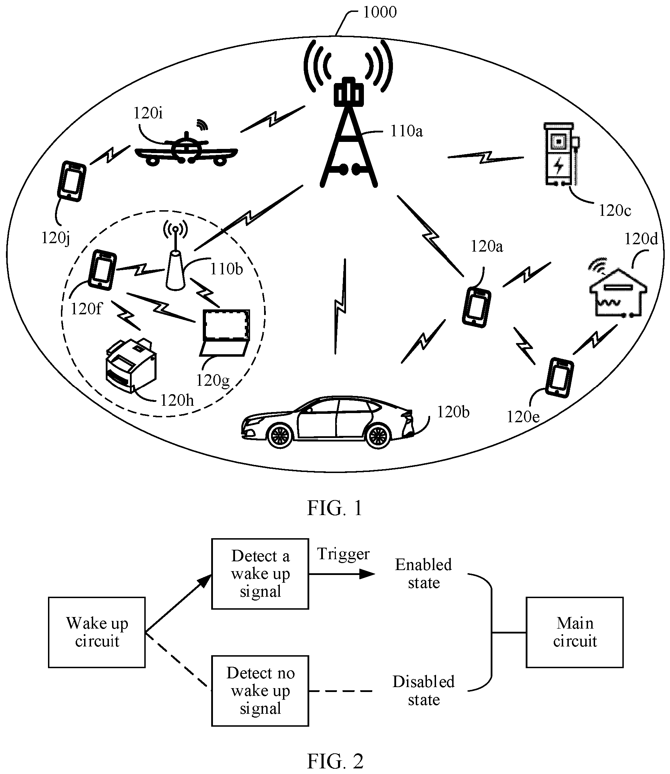

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may further be included in the communication system 1000. For example, the communication system 1000 may further include one or more of a core network (core network, CN) device, a wireless relay device, and a wireless backhaul device. This is not specifically limited herein. The network device may be connected to the core network device in a wireless or wired manner. The core network device and the network device may be different independent physical devices, a function of the core network device and a logical function of the network device may be integrated into a same physical device, or a part of functions of the core network device and a part of functions of the network device may be integrated into one physical device. This is not specifically limited in embodiments of this application.

Optionally, the network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, an access node in a wireless fidelity (wireless fidelity, Wi-Fi) system, or the like; or may be a module or a unit that completes a part of functions of the base station. For example, the network device may be a central unit (central unit, CU), or may be a distributed unit (distributed unit, DU). The CU herein completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete functions of a part of physical (physical, PHY) layers or all physical layers. For specific descriptions of the foregoing protocol layers, refer to related technical specifications of a 3^{rd} generation partnership project (3^{rd} generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application. For ease of description, the following uses the network device as an example for description.

Optionally, the terminal device accesses a core network via the network device. The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with the core network over a radio access network, exchange a voice or data with the RAN, or interact a voice and data with the RAN. The terminal device may include user equipment (user equipment, UE), a wireless terminal device, a mobile terminal device, a device-to-device (device-to-device, D2D) communication terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, an example in which the apparatus configured to implement the function of the terminal is a terminal device is used for description.

It should be understood that the network device and the terminal device may be at fixed positions, or may be movable. The network device and the terminal device may be deployed on land, including an indoor or outdoor device, a handheld device, or a vehicle-mounted device; or may be deployed on water; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network via 120i, the terminal device 120i is a network device. However, for the network device 110a, 120i is a terminal device. In other words, 110a and 120i communicate with each other by using a radio air interface protocol. Certainly, 110a and 120i may alternatively communicate with each other by using an interface protocol between base stations. In this case, for 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between the network device and the terminal device, between the network devices, and between the terminal devices by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem that includes the function of the network device. The control subsystem including the function of the network device herein may be a control center in the foregoing application scenarios such as a smart grid, industrial control, smart transportation, and a smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. A cell that establishes a wireless connection to the terminal device is referred to as a serving cell of the terminal device. When the terminal device communicates with the serving cell, the terminal device is further interfered with by a signal from a neighboring cell.

It should be noted that the solutions in embodiments of this application may also be applied to another communication system, and a corresponding name may also be replaced with a name of a corresponding function in the another communication system.

For ease of understanding embodiments of this application, the following first briefly describes terms in embodiments of this application. It should be understood that these descriptions are merely for ease of understanding of embodiments of this application, and shall not constitute any limitation on this application.

### 1. Radio resource control (radio resource control, RRC) state

A terminal device has three RRC states: an RRC connected (connected) state, an RRC idle (idle) state, and an RRC inactive (inactive) state.

The RRC connected state means that the terminal device establishes an RRC connection to a network device, and may perform data transmission over the RRC connection.

In addition, the RRC connected state may also be referred to as a connected state for short. In embodiments of this application, the "connected state" and the "RRC connected state" are a same concept, and the two concepts are interchangeable with each other.

The RRC idle state means that the terminal device does not establish an RRC connection to the network device, and the network device (for example, a base station) does not store a context of the terminal device. If the terminal device needs to enter the RRC connected state from the RRC idle state, the terminal device needs to initiate an RRC connection establishment process.

In addition, the RRC idle state may also be referred to as an idle state for short. In embodiments of this application, the "idle state" and the "RRC idle state" are a same concept, and the two concepts are interchangeable with each other.

The RRC inactive state means that the terminal device previously enters the RRC connected state at an anchor base station, and then the anchor base station releases the RRC connection, but the anchor base station stores the context of the terminal device; if the terminal device needs to re-enter the RRC connected state from the RRC inactive state, the terminal device needs to initiate an RRC connection resume process (or described as an RRC connection reestablishment process) at a base station on which the terminal device currently camps.

It should be understood that, because the terminal device may be in a moving state, the base station on which the terminal device currently camps and the anchor base station of the terminal device may be a same base station, or may be different base stations. In comparison with the RRC establishment process, the RRC resume process has a shorter delay and lower signaling overheads. However, the anchor base station needs to store the context of the terminal device, and the storage of the anchor base station brings overheads.

In addition, the RRC inactive state may also be referred to as an inactive state for short. In embodiments of this application, the "inactive state" and the "RRC inactive state" are a same concept, and the two concepts are interchangeable with each other.

In embodiments of this application, the following five concepts have a same meaning and are interchangeable with each other: the inactive state, a deactivating state, a not active state, a deactivated state, or a deactivation state. For example, the RRC inactive state may also be described as an RRC not active state, which is referred to as a not active state for short.

### 2. Two types of circuits included in a terminal device

The terminal device includes a main circuit and a wake up circuit, as shown in FIG. 2.

### 2-1. Main circuit of the terminal device:

When the terminal device is in an idle/inactive state, the terminal device determines a paging frame (paging frame, PF) and a position of a paging occasion (paging occasion, PO) in the PF based on an identifier (identifier, ID) (for example, a UE ID) of the terminal device, and then receives paging in the PO. Regardless of whether the terminal device receives paging in the idle/inactive state or receives data in the connected (connected) state, the terminal device may use the main circuit in the terminal device to complete these functions.

The main circuit may also have other descriptions, for example, a main receiver. In embodiments of this application, the main circuit is used as an example for description, and should not be understood as any limitation on embodiments of this application.

In embodiments of this application, meanings indicated by the following descriptions are the same, and interchangeable with each other.

The terminal device operates using the main circuit, the terminal device operates on the main circuit, the terminal device receives or sends a signal using the main circuit, or the main circuit of the terminal device is in an operating/enabled state.

In embodiments of this application, the main circuit may alternatively be replaced with a main link. The main link indicates a connection relationship between the terminal device and a network device, and is a logical concept rather than a physical entity. A 5G NR system is used as an example. The main link may also be described as an NR main link.

Correspondingly, meanings indicated by the following descriptions are the same, and interchangeable with each other.

The terminal device operates over the (NR) main link, the terminal device operates over the (NR) main link, the terminal device receives or sends a signal over the (NR) main link, or the (NR) main link of the terminal device is in an operating/enabled state.

In embodiments of this application, an operating status of the terminal device is described by using the main link as an example, and should not be understood as a limitation on embodiments of this application.

### 2-2. Wake up circuit of the terminal device:

To reduce power consumption of the terminal device, the terminal device may further receive a signal using a separate low power small circuit. The low power small circuit may be implemented using a separate small circuit with a simple structure or a chip, and has low power consumption. The low power small circuit may be referred to as a wake up circuit.

The wake up circuit may also have other descriptions, for example, a wake up radio (wake up radio, WUR) circuit, a low power circuit, and a wake up receiver (wake up receiver, WUR) module. In embodiments of this application, the wake up circuit is used as an example for description, and should not be understood as a limitation on embodiments of this application.

In embodiments of this application, meanings indicated by the following descriptions are the same, and interchangeable with each other.

The terminal device operates using the wake up circuit, the terminal device operates on the wake up circuit, the terminal device monitors or receives a wake up signal (wake up signal, WUS) using the wake up circuit; or the wake up circuit of the terminal device is in an operating state.

In embodiments of this application, the wake up circuit may alternatively be replaced with a WUR link. The WUR link indicates a connection relationship between the terminal device and the network device, and is a logical concept rather than a physical entity.

Correspondingly, meanings indicated by the following descriptions are the same, and interchangeable with each other.

The terminal device operates over the WUR link, the terminal device operates on the WUR link, the terminal device monitors or receives a wake up signal (wake up signal, WUS) over the WUR link, or the WUR link of the terminal device is in an operating state.

In embodiments of this application, meanings indicated by the following descriptions are the same and are interchangeable with each other: monitoring, detection, listening, or receiving. In embodiments of this application, monitoring is used as an example for description.

In embodiments of this application, the operating status of the terminal device is described by using the WUR link as an example, and should not be understood as a limitation on embodiments of this application.

In embodiments of this application, the wake up signal may also be described as a low power wake up signal (low power wake up signal, LP-WUS). Meanings of the wake up signal, the WUS, the low power wake up signal, and the LP-WUS are the same, and interchangeable with each other.

Some simple modulation methods such as on-off-keying (on-off-keying, OOK) or Manchester OOK are usually used for the WUS. Correspondingly, the wake up circuit in the terminal device receives the WUS in an envelope detection manner.

The WUS may be used to wake up at least one terminal device or at least one group of terminal devices. In an example, the WUS includes wake up information, and the wake up information indicates information related to waking up the terminal device. For example, the wake up information is information related to paging. The wake up information may be used by the terminal device to determine whether to perform a paging receiving procedure. Alternatively, the wake up information may be used by the terminal device to determine whether to initiate random access. For example, the wake up information includes information about one or more terminal devices that need to be woken up (for example, a UE ID). The one or more terminal devices may alternatively be in a form of a terminal device group (UE group). Correspondingly, the wake up information may include a group identifier of the terminal device group.

For example, FIG. 2 is a diagram in which a terminal device receives a wake up signal using a wake up circuit.

As shown in FIG. 2, for the terminal device in the idle/inactive state, the terminal device performs detection on the wake up signal using the wake up circuit. If detecting no wake up signal using the wake up circuit, the terminal device controls the main circuit to be in a disabled state (or referred to as a sleep state). If detecting the wake up signal using the wake up circuit, the terminal device triggers wakeup of the main circuit, to be specific, controls the main circuit to be in an enabled state or an operating state. After the main circuit is woken up, the terminal device may perform a paging receiving process.

In other words, the terminal device performs detection on the wake up signal over the WUR link. If detecting no wake up signal over the WUR link, the terminal device controls the main link to be in the disabled state (or referred to as the sleep state). If detecting the wake up signal on the WUR link, the terminal device triggers wakeup of the main link, to be specific, switches from the WUR link to the main link. After the main link is woken up, the terminal device may perform the paging receiving process.

It should be understood that FIG. 2 is mainly described by using an example in which the wake up signal indicates some information related to paging, and should not be understood as a limitation on embodiments of this application. It is clear that the wake up signal may alternatively indicate all information related to paging. In this case, after the main circuit is woken up, random access and the like may be performed.

For another example, an operating process of the terminal device when the terminal device is powered on is described as follows.

When being powered on, the terminal device first searches for a signal on the main link. When the signal on the main link can be found, the terminal device camps on the main link. When the signal on the main link indicates configuration information of the wake up link, the terminal device may further search for a signal on the wake up link based on the configuration information of the wake up link. If the signal on the wake up link can be found and quality of the signal on the wake up link is good, the wake up link of the terminal device enters an operating state.

Alternatively, when being powered on, the terminal device first searches for a signal on the main link. When the signal on the main link cannot be found, the terminal device searches for a signal on the wake up link based on configuration information preset in the terminal device. If the signal on the wake up link can be found and quality of the signal on the wake up link is good, the wake up link of the terminal device enters an operating state.

### 3. Discontinuous reception (discontinuous reception, DRX) mechanism

The DRX mechanism in LTE is still used in a 5G NR technology. The DRX mechanism is introduced mainly to reduce power consumption. A network device (for example, a base station) configures a DRX cycle for a terminal device in a connected state. The DRX cycle may be a long DRX cycle, or may be a short DRX cycle. The long DRX cycle is a default mandatory configuration, and the short DRX cycle is an optional configuration. If the short DRX cycle is configured, the terminal device starts a short cycle timer drx-ShortCycleTimer when using the short DRX cycle. When the drx-ShortCycleTimer expires, the terminal device implicitly switches to the long DRX cycle. The drx-ShortCycleTimer is expressed as a quantity of short DRX cycles.

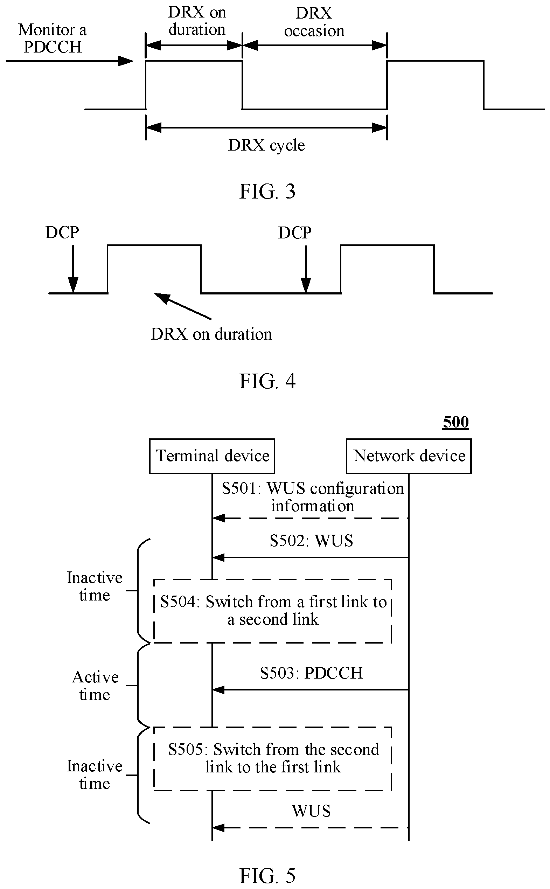

As shown in FIG. 3, the DRX cycle includes an "on duration" part and an "opportunity for DRX" part. The terminal device monitors and receives a physical downlink control channel (physical downlink control channel, PDCCH) in "on duration" time, that is, receives physical downlink control information (downlink control information, DCI) carried on the PDCCH. The terminal device may not monitor (or not receive) the PDCCH in "opportunity for DRX" time, to reduce power consumption. The opportunity for DRX is also referred to as a DRX occasion or a DRX opportunity.

The DRX mechanism includes an on duration timer drx-onDurationTimer. At the beginning of each DRX cycle (that is, at the beginning of on duration of each DRX cycle), the terminal device needs to start the drx-onDurationTimer. When the drx-onDurationTimer expires, it indicates that the "on duration" time ends. In this case, the terminal device enters the "opportunity for DRX" time.

In addition, the drx-onDurationTimer may have another name, for example, an on duration timer. In embodiments of this application, the on duration timer is used as an example for description, and should not be understood as a limitation on embodiments of this application.

The DRX mechanism further includes an inactivity timer drx-InactivityTimer. When the terminal device receives a PDCCH indicating new transmission (new transmission), because the terminal device is likely to continue being scheduled by the network device in subsequent time, the terminal device needs to start the drx-InactivityTimer, and the terminal device monitors and receives the PDCCH in running time of the drx-InactivityTimer.

In addition, the drx-InactivityTimer may have another name, for example, an inactive timer. In embodiments of this application, the inactivity timer is used as an example for description, and should not be understood as a limitation on embodiments of this application.

The DRX mechanism further includes a retransmission timer RetransmissionTimer. The RetransmissionTimer further specifically includes an uplink retransmission timer drx-RetransmissionTimerUL and a downlink retransmission timer drx-RetransmissionTimerDL. Because the network device may schedule retransmission of the terminal device in running time of the RetransmissionTimer, the terminal device monitors and receives the PDCCH in the running time of the RetransmissionTimer.

In conclusion, the terminal device needs to monitor the PDCCH during running of the drx-onDurationTimer, drx-InactivityTimer, uplink drx-RetransmissionTimerUL, and downlink drx-RetransmissionTimerDL. The time is referred to as DRX "active time (Active Time)", and the terminal device needs to wake up to prepare to receive signaling and data. However, the terminal device may not need to monitor the PDCCH when not in the running periods of the timers. The time is referred to as DRX "sleep time" (the sleep time is also referred to as inactive time), and the terminal device may sleep.

It should be noted that, in the DRX "sleep time", the terminal device only does not need to monitor the PDCCH, but still normally performs other downlink receiving, for example, receives a physical downlink shared channel (physical downlink shared channel, PDSCH). In conclusion, the terminal device needs to monitor the PDCCH in the DRX "active time (Active Time)", and the terminal device does not need to monitor the PDCCH in the DRX "sleep time".

It should be understood that, in some other functions other than the DRX mechanism, it may be limited that the terminal device needs to be in the "active time" or the "sleep time" in some cases. This does not conflict with the DRX mechanism. Instead, a union between the limitation and the DRX mechanism may be used. Therefore, whether the terminal device is finally actually in the "active time" or the "sleep time" needs to be determined based on all functions of the terminal device as a whole. Power consumption of the terminal device in the DRX "active time" is higher than power consumption of the terminal device in the DRX "sleep time".

Specifically, in the standard 3GPP TS 38.321, a definition of the active time includes one or more of the following.
a drx-onDurationTimer or a drx-InactivityTimer configured for a DRX group is running (drx-onDurationTimer or drx-InactivityTimer configured for the DRX group is running); or (or)
a drx-RetransmissionTimerDL, drx-RetransmissionTimerUL, or sidelink retransmission timer drx-RetransmissionTimerSL is running on any serving cell in a DRX group (drx-RetransmissionTimerDL, drx-RetransmissionTimerUL or drx-RetransmissionTimerSL is running on any Serving Cell in the DRX group); or (or)
a random access contention resolution timer ra-ContentionResolutionTimer or a message B response window msgB-ResponseWindow is running (ra-ContentionResolutionTimer or msgB-ResponseWindow is running); or (or)
a scheduling request is sent on a physical uplink control channel (physical uplink control channel, PUCCH) and is pending, where if this serving cell is a part of a non-terrestrial network, the active time is started after scheduling request transmission, where the scheduling request transmission is performed when a scheduling request counter SR_COUNTER for all scheduling request configurations with pending scheduling requests plus round trip time between the terminal device and the network device (for example, a base station), for example, UE-gNB RTT (round trip time, RTT) is 0 (a Scheduling Request is sent on PUCCH and is pending. If this Serving Cell is part of a non-terrestrial network, the Active Time is started after the Scheduling Request transmission that is performed when the SR_COUNTER is 0 for all the SR configurations with pending SR(s) plus the UE-gNB RTT); or (or)
a PDCCH that indicates new transmission and that is scrambled by using a cell radio network temporary identifier (cell radio network temporary identifier, C-RNTI) of a MAC entity has not been received after successful reception of a random access response for a random access preamble not selected by the MAC entity among a contention-based random access preamble (a PDCCH indicating a new transmission addressed to the C-RNTI of the MAC entity has not been received after successful reception of a Random Access Response for the Random Access Preamble not selected by the MAC entity among the contention-based Random Access Preamble).

### 4. DCP mechanism

In 5G technologies, power consumption of a terminal device needs to be further reduced. For a current DRX mechanism, the terminal device needs to monitor and receive a PDCCH in DRX "on duration". However, in many cases, the terminal device detects no PDCCH for scheduling the terminal device. In other words, the terminal device wakes up in vain and power consumption for monitoring the PDCCH is consumed in vain. Therefore, it is proposed to introduce an indication signal (PDCCH wake up signal, PDCCH-WUS). The indication signal can indicate, based on the current DRX mechanism, whether the terminal device needs to wake up or can sleep in subsequent latest DRX "on duration". A signal form of the PDCCH-WUS may be physical downlink control information (downlink control information, DCI), and the PDCCH-WUS is downlink control information with cyclic redundancy code (cyclic redundancy code, CRC) scrambled by power saving radio network temporary identifier (power saving radio network temporary identifier, PS-RNTI) (DCI with CRC scrambled by PS-RNTI, DCP) in a 3GPP protocol.

For example, an indication manner of the DCP may be as follows.

If the DCP received by the terminal device indicates wakeup (for example, a value is set to 1), the terminal device needs to wake up in "on duration" associated with a current DRX cycle, that is, needs to start an associated drx-onDurationTimer.

If the DCP received by the terminal device indicates sleeping (for example, the value is set to 0), the terminal device needs to sleep in the "on duration" associated with the current DRX cycle, that is, does not need to start the associated drx-onDurationTimer.

In addition, if receiving no DCP on an occasion for monitoring the DCP, the terminal device determines, based on a configuration of a network device (for example, a base station), whether the associated drx-onDurationTimer needs to be started.

A time domain position for monitoring the DCP may be a position of one offset (offset) before the DRX "on duration" time, as shown in FIG. 4.

It should be noted that the DCP is a mechanism used in combination with DRX, that is, a mechanism used in a connected state.

It can be learned that, in the DCP mechanism, the terminal device needs to wake up on each occasion for monitoring the DCP to perform detection on the DCP. Each occasion for monitoring the DCP has specific duration, for example, 0.5 ms. For the terminal device, detection power consumption and receiving power consumption are still high.

In view of this, embodiments of this application provide a communication method. The method may be applied to the communication system shown in FIG. 1. In the communication method provided in embodiments of this application, for a terminal device in a connected state, the terminal device monitors a WUS from a network device over a first link in inactive time of the terminal device. If the WUS is detected, the terminal device monitors a PDCCH from the network device over a second link in active time of the terminal device. Power consumption of the terminal device operating on the first link is less than power consumption of the terminal device operating on the second link.

In other words, if the terminal device is in the connected state, the terminal device no longer monitors the WUS from the network device over the second link, but monitors the WUS from the network device over the first link. In other words, in a period in which the terminal device monitors the WUS from the network device over the first link, the second link of the terminal device does not operate.

In this way, because the power consumption of the terminal device operating on the first link is less than the power consumption of the terminal device operating on the second link, in comparison with a case in which the terminal device monitors the WUS and the PDCCH from the network device over the second link, power consumption of the terminal device can be reduced in embodiments of this application. In addition, when the network device has downlink information to be sent to the terminal device, the network device sends the WUS over the first link in time, to wake up the terminal device. This helps ensure a data transmission delay requirement. In this way, in embodiments of this application, the power consumption of the terminal device can be reduced while the data transmission delay requirement is ensured.

It should be understood that names of messages between devices, names of parameters in the messages, or the like in the following embodiments of this application are merely examples, and there may be other names during specific implementation. This is not specifically limited in embodiments of this application.

In the communication method provided in embodiments of this application, the first link may include a WUR link. The second link may include a main link. This is uniformly described herein, and details are not described below again.

The following describes in detail the communication method provided in embodiments of this application with reference to FIG. 5 to FIG. 11. A communication method 500 provided in embodiments of this application includes the following steps.

(Optional) S501: A network device sends WUS configuration information to a terminal device. Correspondingly, the terminal device monitors the WUS configuration information from the network device.

For example, S501 includes:
The network device sends the WUS configuration information to the terminal device over a second link. Correspondingly, the terminal device monitors the WUS configuration information from the network device over the second link.

The WUS configuration information is used by the terminal device to monitor a WUS over a first link. In this embodiment of this application, the WUS configuration information is applicable to a terminal device in a connected state, so that the terminal device in the connected state monitors the WUS over the first link. For details, refer to descriptions of S502. Details are not described herein.

For example, the WUS configuration information is used to configure at least one of the following:
a time domain position of the WUS, a frequency domain position of the WUS, or a signal configuration of the WUS. The signal configuration of the WUS includes a format of the WUS, a modulation scheme of the WUS, and the like.

For example, the WUS configuration information is carried in RRC dedicated signaling, for example, an RRC reconfiguration message.

It should be understood that S501 is an optional step. If the terminal device is preconfigured with the WUS configuration information, the terminal device may not perform S501.

S502: The network device sends the WUS to the terminal device over the first link in inactive time of the terminal device. Correspondingly, the terminal device monitors the WUS from the network device over the first link.

That the terminal device is in the connected state may be understood as that the terminal device establishes an RRC connection to the network device, and may perform data transmission over the RRC connection.

The inactive time of the terminal device may be understood as DRX inactive time of the terminal device. For details, refer to the related descriptions of the DRX mechanism.

Alternatively, the inactive time of the terminal device may be understood as inactive time of the terminal device on the second link, that is, DRX inactive time of the terminal device on the second link. In other words, on the second link, the terminal device does not listen to a PDCCH in the inactive time of the terminal device.

The first link may include a WUR link. For details, refer to the descriptions of FIG. 2. In other words, the network device sends the WUS to the terminal device over the WUR link. Correspondingly, the terminal device monitors the WUS from the network device over the WUR link.

It should be understood that the first link corresponds to a wake up circuit, as shown in FIG. 2. From a perspective of a circuit, S502 may be replaced with: The network device sends the WUS to the terminal device over the first link (for example, the WUR link) in the inactive time of the terminal device. Correspondingly, the terminal device monitors the WUS from the network device using the wake up circuit.

It should be understood that, that the network device sends the WUS to the terminal device over the first link, and the terminal device monitors the WUS from the network device over the first link may be replaced with:

The network device sends the WUS to the terminal device. Correspondingly, the terminal device monitors the WUS from the network device.

The WUS is a signal modulated by using an on-off-keying (on-off-keying, OOK) modulation method, or the WUS is a signal received in an envelope detection manner.

It should be noted that, that the terminal device monitors the WUS from the network device (over the first link) may be that the terminal device continuously monitors the WUS from the network device (over the first link), or may be that the terminal device periodically monitors the WUS from the network device (over the first link). Periodic monitoring may be understood as periodically performing monitoring on some determined time opportunities, and not performing monitoring in other time.

Optionally, the terminal device monitors the WUS from the network device over the first link only when a specific condition is met. The following provides descriptions by using Manner 1 to Manner 3.

Manner 1: If a condition 1 is met, the terminal device monitors the WUS from the network device over the first link.

The condition 1 includes: A signal quality measurement result of a first signal is greater than or equal to a first threshold.

The first signal may be a reference signal (reference signal).

A signal quality indicator may include one or more of the following:
reference signal received power (reference signal received power, RSRP), reference signal received quality (reference signal received quality, RSRQ), or a signal to interference plus noise ratio (signal to interference plus noise ratio, SINR). In this embodiment of this application, the RSRP is used as an example for description.

The signal quality measurement result of the first signal includes a result of signal quality measurement performed on the first signal over the first link or the second link.

For example, the signal quality measurement result of the first signal includes a result of measuring RSRP of the first signal over the first link. In other words, before performing S502, the terminal device measures the RSRP of the first signal over the first link, to obtain the result of measuring the RSRP of the first signal. The first signal is a reference signal sent by the network device on the first link, that is, a reference signal received by the terminal device on the first link.

Correspondingly, the first threshold includes an RSRP threshold 1. If the result of measuring the RSRP of the first signal over the first link is greater than (or equal to) the RSRP threshold 1, it means that communication performance of the first link is good. The terminal device monitors the WUS from the network device over the first link, so that good monitoring performance can be achieved.

For another example, the signal quality measurement result of the first signal includes a result of measuring RSRP of the first signal over the second link. In other words, before performing S502, the terminal device measures the RSRP of the first signal over the second link, to obtain the result of measuring the RSRP of the first signal. The first signal is a reference signal sent by the network device on the second link, that is, a reference signal received by the terminal device on the second link, for example, a synchronization signal and physical broadcast channel block (synchronization signal and physical broadcast channel block, SSB) or a channel state information-reference signal (channel state information-reference signal, CSI-RS).

Correspondingly, the first threshold includes an RSRP threshold 2. If the result of measuring the RSRP of the first signal over the second link is greater than (or equal to) the RSRP threshold 2, it means that communication performance of the first link is also good. The terminal device monitors the WUS from the network device over the first link, so that good monitoring performance can be achieved.

It should be understood that, if the condition 1 is not met, the WUS from the network device is not monitored over the first link, and the WUS from the network device may be monitored over the second link, or the PDCCH from the network device may be monitored over the second link. For details, refer to the descriptions of FIG. 2. Details are not described herein again.

For example, that the condition 1 is not met may be understood as that the result of measuring the RSRP of the first signal over the first link is less than the RSRP threshold 1, or the result of measuring the RSRP of the first signal over the second link is less than the RSRP threshold 2.

Manner 2: If a condition 2 is met, the terminal device monitors the WUS from the network device over the first link.

The condition 2 includes:
The terminal device receives DRX configuration information and the WUS configuration information from the network device. The DRX configuration information indicates a DRX configuration to the terminal device, and the WUS configuration information indicates a WUS configuration to the terminal device.

In other words, if the network device configures both the DRX configuration and the WUS configuration for the terminal device, it indicates that the terminal device may monitor the WUS from the network device over the first link.

For example, the DRX configuration information includes one or more of the following:
a DRX cycle, duration of a DRX timer, for example, duration of a drx-onDurationTimer. Reference may be made to the descriptions of the DRX mechanism. Details are not described herein again.

For example, for the WUS configuration information, refer to the descriptions of S501. Details are not described herein again.

Manner 3: If a condition 3 is met, the terminal device monitors the WUS from the network device over the first link.

The condition 3 includes the following two items.

Condition 3a: The terminal device receives DCP configuration information and the WUS configuration information from the network device.

The DCP configuration information indicates a DCP configuration to the terminal device, and the WUS configuration information indicates a WUS configuration to the terminal device.

For example, the DCP configuration information includes one or more of the following:
a time domain position of DCP, a frequency domain position of the DCP, or a signal configuration of the DCP. The signal configuration of the DCP includes a format size of the DCP, a scrambling identifier of the DCP, and the like. For the DCP configuration information, refer to the descriptions of the DCP mechanism. Details are not described herein again.

For example, for the WUS configuration information, refer to the descriptions of S501. Details are not described herein again.

Condition 3b: A priority of the DCP configuration is lower than a priority of the WUS configuration.

For example, that the priority of the WUS configuration (or a WUS mechanism) is higher, for example, higher than the priority of the DCP configuration (or the DCP mechanism) is specified in a protocol. It means that the terminal device preferentially uses the WUS mechanism, and when the terminal device cannot use the WUS mechanism, the terminal device uses the DCP mechanism.

For another example, when configuring the WUS mechanism and the DCP mechanism, the network device (for example, a base station) indicates, to the terminal device, a mechanism that is preferentially to be used. For example, the network device sends indication information 1 to the terminal device. Correspondingly, the terminal device receives the indication information 1 from the network device. The indication information 1 indicates that the priority of the DCP configuration is lower than the priority of the WUS configuration. Alternatively, the indication information 1 indicates that the priority of the DCP mechanism is lower than the priority of the WUS mechanism.

For the terminal device, the terminal device preferentially uses a mechanism with a higher priority, that is, the WUS mechanism. For example, the terminal device is in the connected state, and monitors the WUS over the first link in the inactive time of the terminal device. For details, refer to the descriptions of S502. The details are not described herein again.

Because the priority of the DCP configuration is lower than the priority of the WUS configuration, the terminal device monitors, preferentially based on the WUS configuration, the WUS over the first link, and may no longer monitor the DCP based on the DCP configuration information.

It should be understood that, if the network device configures all of a DRX configuration, the WUS configuration, and the DCP configuration for the terminal device, the terminal device preferentially uses the WUS mechanism with a higher priority by determining priorities of the WUS configuration and the DCP configuration.

It should be understood that, in this embodiment of this application, the condition 3 includes the condition 3a and the condition 3b. That the condition 3 is met means that both the condition 3a and the condition 3b are met.

It should be noted that the terminal device monitors the WUS from the network device over the first link only when a specific condition is met. The specific condition may be one or more of the condition 1, the condition 2, and the condition 3.

In other words, the specific condition may be the condition 1, the condition 2, or the condition 3 (that is, Manner 1, Manner 2, or Manner 3). Alternatively, the specific condition may be a combination of the condition 1 and the condition 2. That is, it may be understood as Manner 4: If the condition 1 and the condition 2 are met, the terminal device monitors the WUS from the network device over the first link. Alternatively, the specific condition may be a combination of the condition 1 and the condition 3. That is, it may be understood as Manner 5: If the condition 1 and the condition 3 are met, the terminal device monitors the WUS from the network device over the first link.

Optionally, before performing S502, the terminal device further performs the following step.

The network device sends the DCP configuration information to the terminal device over the second link. Correspondingly, the terminal device monitors the DCP configuration information from the network device over the second link.

The DCP configuration information is used by the terminal device to monitor the DCP over the second link.

For example, the DCP configuration information may include one or more of the following:
the frequency domain position of the DCP, the time domain position of the DCP, the signal configuration of the DCP, or the like. Reference may be made to the descriptions of Manner 3. Details are not described herein again.

The DCP is used to wake up the terminal device, and the WUS is used to wake up a terminal device group to which the terminal device belongs.

For example, the terminal device that performs S501 to S505 is denoted as a terminal device 1. The DCP may identify the terminal device 1. For example, the DCP is scrambled by using a PS-RNTI corresponding to the terminal device 1, to indicate the terminal device 1 to be woken up. Because the DCP is not scrambled by using a PS-RNTI corresponding to a terminal device 2, it may be understood as that the DCP is not for waking up the terminal device 2.

A terminal device group to which the terminal device 1 belongs is denoted as a terminal device group A. The terminal device group A further includes the terminal device 2. The WUS may include an identifier of the terminal device group A, indicating each terminal device in the terminal device group A to be woken up.

It should be understood that, for the terminal device 1, the terminal device 1 first monitors the WUS (that is, performs S502). If the terminal device 1 detects the WUS, and the detected WUS includes the identifier of the terminal device group A, because the terminal device 1 belongs to the terminal device group A, the terminal device 1 is to be woken up. Then, the woken-up terminal device 1 receives the DCP based on the DCP configuration information. The DCP is scrambled by using the PS-RNTI corresponding to the terminal device 1. Therefore, the terminal device 1 determines that the terminal device 1 is woken up.

It should be noted that, for the terminal device 2, the terminal device 2 may also first monitors the WUS (that is, performs S502). If the terminal device 2 detects the WUS, and the detected WUS includes the identifier of the terminal device group A, because the terminal device 2 belongs to the terminal device group A, the terminal device 2 is to be woken up. Then, the woken-up terminal device 2 receives the DCP based on the DCP configuration information. The DCP is scrambled by using the PS-RNTI corresponding to the terminal device 1, but is not scrambled by using the PS-RNTI corresponding to the terminal device 2. Therefore, the terminal device 2 determines that the terminal device 2 sleeps.

It should be understood that the terminal device may first monitor the WUS from the network device (that is, perform S502), and then receive the DCP configuration information. Alternatively, the terminal device may first receive the DCP configuration information, and then monitor the WUS from the network device (that is, perform S502). This is not limited in this embodiment of this application.

For the terminal device, the terminal device monitors the WUS by performing S502. If detecting no WUS, in some embodiments, the terminal device may continuously monitor the WUS, that is, continue performing S502. Otherwise, if detecting the WUS, the terminal device performs S503.

S503: The network device sends the PDCCH to the terminal device over the second link in active time of the terminal device. Correspondingly, the terminal device monitors the PDCCH from the network device over the second link.

The second link may include a main link. For details, refer to the descriptions of FIG. 2. In other words, the network device sends the PDCCH to the terminal device over the main link. Correspondingly, the terminal device monitors the PDCCH from the network device over the main link.

Alternatively, it may be understood as:
The network device sends downlink control information to the terminal device through the PDCCH of the second link (or the main link) in the active time of the terminal device. Correspondingly, the terminal device monitors the downlink control information from the network device through the PDCCH of the second link (or the main link).

It should be understood that the second link corresponds to the main circuit, as shown in FIG. 2. From a perspective of a circuit, S503 may be replaced with: The network device sends the PDCCH to the terminal device over the second link (for example, an NR main circuit) in the active time of the terminal device. Correspondingly, the terminal device monitors the PDCCH from the network device using the main circuit.

It should be understood that, that the network device sends the PDCCH to the terminal device over the second link, and correspondingly the terminal device monitors the PDCCH from the network device over the second link may be replaced with the following:
the network device sends the PDCCH to the terminal device, and correspondingly the terminal device monitors the PDCCH from the network device.

The PDCCH is a signal modulated by using a quadrature phase shift keying (quadrature phase shift keying, QPSK) modulation method.

It should be noted that power consumption of the terminal device operating on the first link is less than power consumption of the terminal device operating on the second link. It may be understood as that, in time periods of same duration, power consumption for monitoring a signal by the terminal device over the first link is less than power consumption for monitoring a signal by the terminal device over the second link.

For example, FIG. 2 is used as an example. That the terminal device monitors the signal over the first link may mean that the terminal device monitors the signal using the wake up circuit. That the terminal device monitors the signal over the second link may mean that the terminal device monitors the signal using the main circuit. In time periods of same duration, power consumption for monitoring a signal by the terminal device using the wake up circuit is less than power consumption for monitoring a signal by the terminal device using the main circuit. For details, refer to the descriptions of FIG. 2. The details are not described herein again.

In this way, in comparison with a case in which both the WUS and the PDCCH are monitored over the second link, in embodiments of this application, the terminal device no longer monitors the WUS over the second link, but monitors the WUS over the first link and monitors the PDCCH over the second link. Because the power consumption of the terminal device operating on the first link is less than the power consumption of the terminal device operating on the second link, power consumption of the terminal device in the connected state is reduced.

The active time of the terminal device may be understood as active time of the terminal device on the second link, that is, DRX active time of the terminal device on the second link. In other words, on the second link, the terminal device monitors the PDCCH in the active time of the terminal device.

Alternatively, the active time of the terminal device may be understood as DRX active time of the terminal device. For details, refer to the related descriptions of the DRX mechanism.

The following describes the active time of the terminal device by using an example.

The active time of the terminal device includes running time of a first timer. In other words, if detecting the WUS, the terminal device starts (or restarts) the first timer.

The first timer is a timer related to the active time of the terminal device, for example, one or more of a drx-onDurationTimer, drx-InactivityTimer, drx-RetransmissionTimerUL, drx-RetransmissionTimerDL, drx-RetransmissionTimerSL, ra-ContentionResolutionTimer, and msgB-ResponseWindow.

In a possible implementation, if the terminal device receives the DCP configuration information, an occasion on which the terminal device monitors the DCP is as follows.

If the WUS is detected, after determining to switch from the first link to the second link (that is, after performing S504), and before starting (or restarting) the first timer, the terminal device monitors, based on the DCP configuration information, the DCP over the second link.

In other words, for the terminal device, the terminal device first performs S504, and then monitors the DCP over the second link. If the detected DCP is used to wake up the terminal device, the terminal device starts (or restarts) one or more of first timers, to indicate that the terminal device enters the active time of the terminal device. The started (or restarted) first timer may be the drx-InactivityTimer (for details, refer to the following descriptions of Example 1), may be the drx-onDurationTimer (for details, refer to the following descriptions of Example 2), or may include the drx-InactivityTimer and the drx-onDurationTimer (for details, refer to the following descriptions of Example 3).

It is easy to understand that, for the terminal device, if the detected DCP indicates the terminal device to sleep, the terminal device does not start the first timer, does not enter the active time of the terminal device, and is still in the inactive time.

In this embodiment of this application, if the terminal device receives no DCP configuration information, a processing step performed by the terminal device includes:

If the WUS is detected, after determining to switch from the first link to the second link (that is, after performing S504), the terminal device starts (or restarts) the first timer, and no longer monitors the DCP. For the started (or restarted) first timer, refer to the descriptions in the previous paragraph. Details are not described herein again.

The following describes the started (or restarted) first timer by using Example 1, Example 2, and Example 3.

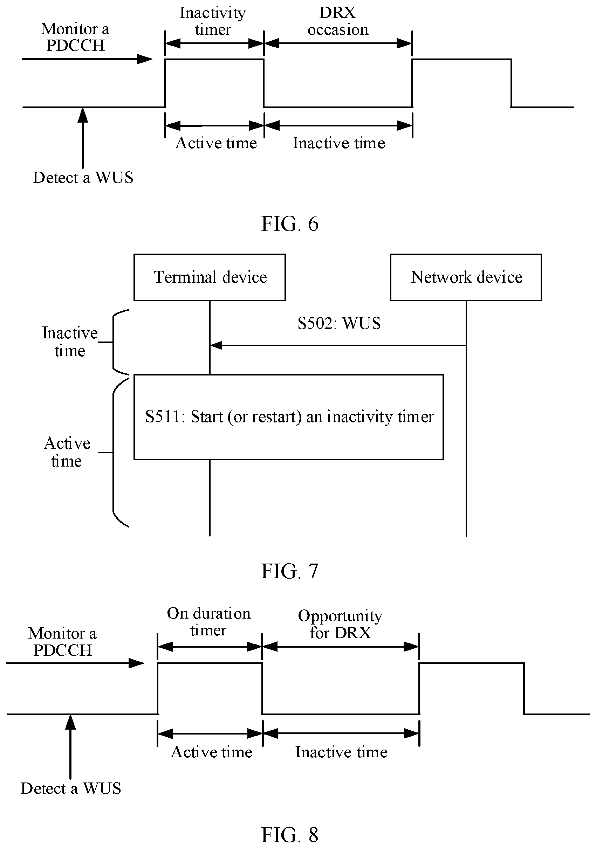

Example 1: The started (or restarted) first timer is the drx-InactivityTimer. Correspondingly, the active time of the terminal device includes running time of the drx-InactivityTimer, as shown in FIG. 6.

In this case, as shown in FIG. 7, if the terminal device detects the WUS, S511 is further performed.

S511: If detecting the WUS, the terminal device starts (or restarts) the inactivity timer drx-InactivityTimer.

For example, based on the descriptions of S511, it may be understood as that a trigger condition for starting (or restarting) the drx-InactivityTimer includes: The terminal device detects the WUS.

For example, the terminal device does not monitor the DCP. If detecting the WUS, the terminal device starts (or restarts) the drx-InactivityTimer.

For another example, the terminal device monitors the DCP. If detecting the WUS and the DCP, and the DCP indicates to wake up the terminal device, the terminal device starts (or restarts) the drx-InactivityTimer.

For example, if detecting the WUS in a first time unit (in/during the first time unit), the terminal device starts (or restarts) the drx-InactivityTimer in a second time unit (in the second time unit).

The first time unit is earlier than the second time unit. It may be understood as that the terminal device first detects the WUS, and then starts (or restarts) the drx-InactivityTimer.

The second time unit meets one of the following.

In a first item, there is an interval of first duration between the first time unit and the second time unit.

The first duration indicates a length of an enabling time period of the main circuit of the terminal device.

In addition, the enabling time period may have another name, for example, a ramp up (ramp up) time period or a transition (transition) time period. In this embodiment of this application, the enabling time period is used as an example for description, and should not be understood as a limitation on this embodiment of this application. Similarly, the first duration may also have another name, for example, a first time length or a time threshold 1. In this embodiment of this application, the first duration is used as an example for description, and should not be understood as a limitation on this embodiment of this application.

It is easy to understand that, because the main link of the terminal device enters an operating state from a sleep state, enabling of the main circuit takes a specific enabling time period, and the main circuit can be in the operating state only after the enabling time period. For example, the drx-InactivityTimer is started (or restarted) after the enabling time period. Terminal devices have different capability strength. Correspondingly, enabling time periods are also different. For example, for a terminal device with a weak capability, it takes 20 ms for the main link to enter the operating state from the sleep state. For a terminal device with a strong capability, it takes 10 ms for the main link to enter the operating state from the sleep state.

For example, a process of determining the first duration is as follows.

For example, the terminal device sends capability information 1 to the network device (for example, a base station). Correspondingly, the network device receives the capability information 1 from the terminal device.

The capability information 1 indicates a capability of the terminal device. For example, the capability of the terminal device includes the length of the enabling time period of the main circuit.

For the network device, the network device uses a time length indicated by the capability information 1 as the first duration. In other words, the capability information 1 includes information about the first duration.

Specifically, the time length indicated by the capability information 1 is 10 ms, and the first duration is 10 ms.

For another example, the terminal device sends capability information 1 to the network device (for example, a base station). Correspondingly, the network device receives the capability information 1 from the terminal device.

The capability information 1 indicates a capability of the terminal device. For example, the capability of the terminal device includes the length of the enabling time period of the main circuit.

For the network device, the network device configures the first duration based on a time length indicated by the capability information 1.

The time length indicated by the capability information 1 may be the same as or different from the first duration configured by the network device. Specifically, the time length indicated by the capability information 1 is 10 ms, and the network device configures the first duration as 10 ms, or the network device configures the first duration as 11 ms.

For still another example, the first duration is predefined in the protocol.

Specifically, the first duration is a maximum value in lengths of enabling time periods of the main circuit under various capabilities of the terminal devices. In other words, all terminal devices in a communication system can successfully enable main circuits after the first duration.

In a second item, the second time unit is an initial time unit after the first time unit.

For example, a time point at which the drx-InactivityTimer is started (or restarted), for example, a start position of each system frame number (system frame number, SFN) is specified in the protocol. Correspondingly, the terminal device starts (or restarts) the drx-InactivityTimer at a start position of a next SFN that is after the WUS is received.

For example, system frame numbers are 0 to 1023, and each system frame is 10 ms. A start time point is a 0^{th} ms. The system frame number 0 corresponds to the 0^{th} ms to a 9^{th} ms, the system frame number 1 corresponds to a 10^{th} ms to a 19^{th} ms, and the rest may be deduced by analogy. If the terminal device receives the WUS at a 25^{th} ms, the terminal device starts (or restarts) the drx-InactivityTimer at a start position of a next SFN (namely, a start position of an SFN 3) that is after the WUS is received.

In the second item, it may also be understood as that the time point at which the drx-InactivityTimer is started (or restarted), for example, a start position of each time unit is specified in the protocol.

In a third item, the second time unit is an initial time unit that is indicated by a preconfigured index and that is after the first time unit.

For example, the preconfigured index includes an even system frame number, for example, a start position of each even system frame number.

Correspondingly, the terminal device starts (or restarts) the drx-InactivityTimer at a start position of a next even SFN that is after the WUS is received.

For example, system frame numbers are 0 to 1023, and each system frame is 10 ms. A start time point is a 0^{th} ms. The system frame number 0 corresponds to the 0^{th} ms to a 9^{th} ms, the system frame number 1 corresponds to a 10^{th} ms to a 19^{th} ms, and the rest may be deduced by analogy. If the terminal device receives the WUS at the 25^{th} ms, the terminal device starts (or restarts) the drx-InactivityTimer at a start position of a next even SFN (namely, a start position of an SFN 4) that is after the WUS is received.

It should be understood that the preconfigured index may alternatively include another SFN. For example, the SFN is an integer multiple of 5, that is, SFN 0/5/10/15, or the like. This is not limited in this embodiment of this application.

In the third item, it may also be understood as that a time point at which the drx-InactivityTimer is started (or restarted), for example, a time point indicated by the preconfigured index is specified in the protocol.

In a fourth item, the second time unit is a time unit indicated by the WUS. The WUS is the WUS detected by the terminal device in S503.

For example, a system frame (system frame, SF) is used as an example, and each SF corresponds to one system frame number (system frame number, SFN). The WUS indicates one SFN. Correspondingly, the terminal device starts (or restarts) the drx-InactivityTimer at an SF start position corresponding to the SFN indicated by the WUS. For example, the WUS indicates an SFN 2. The terminal device starts (or restarts) the drx-InactivityTimer at a start position of the SFN 2 that is after the WUS is received.

In the fourth item, it may also be understood as that the WUS indicates a time point at which the drx-InactivityTimer is started (or restarted).

It should be understood that, in this embodiment of this application, one time unit may be one or several symbols (symbols), one or several slots (slots), one or several mini-slots (mini-slots), one or several subframes, one or several frames, one or several Ts, one or several Tc, or the like. In this embodiment of this application, the system frame is used as an example to describe the time unit. The frame and the system frame have a same meaning, and interchangeable with each other.

It should be noted that, after the DRX configuration information from the network device is received, and before the WUS from the network device is monitored over the first link, if it is detected that the WUS is used to start or restart the inactivity timer, the terminal device performs the following step 1 or step 2.

Step 1: The terminal device ignores a first configuration.

The first configuration is a configuration indicated by the DRX configuration information to the terminal device.

The first configuration includes at least one of the following: the DRX cycle or running duration of the drx-onDurationTimer.

It should be understood that step 1 may alternatively have other descriptions. For example, the terminal device deletes the first configuration, the terminal device discards the first configuration, or the terminal device no longer performs a related processing step based on the first configuration.

Step 2: The terminal device determines that the first configuration is invalid.

For the first configuration, refer to the descriptions of step 1. Details are not described herein again.

In the first configuration, the DRX cycle is 0, and the running duration of the drx-onDurationTimer is 0. In other words, that the network device performs a new processing step includes: The network device updates the first configuration. For example, the DRX cycle is 0, and the running duration of the drx-onDurationTimer is 0. Then, the network device indicates an updated first configuration to the terminal device. In this way, the terminal device may determine that the first configuration is invalid.

Example 2: The started (or restarted) first timer is the drx-onDurationTimer. Correspondingly, the active time of the terminal device includes running time of the drx-onDurationTimer, as shown in FIG. 8.

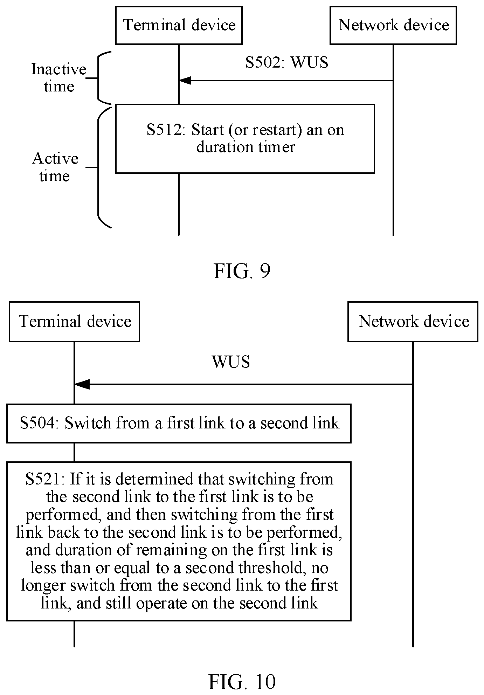

In this case, as shown in FIG. 9, if the terminal device detects the WUS, S512 is further performed.

S512: If detecting the WUS, the terminal device starts (or restarts) the on duration timer drx-onDurationTimer.

For example, based on the descriptions of S512, it may be understood as that a trigger condition for starting (or restarting) the drx-onDurationTimer includes: The terminal device detects the WUS.

For example, the terminal device does not monitor the DCP. If detecting the WUS, the terminal device starts (or restarts) the drx-onDurationTimer.

For another example, the terminal device monitors the DCP. If detecting the WUS and the DCP, and the DCP indicates to wake up the terminal device, the terminal device starts (or restarts) the drx-onDurationTimer.

For example, if detecting the WUS in a first time unit (in/during the first time unit), the terminal device starts (or restarts) the drx-onDurationTimer in a third time unit (in the third time unit).

The first time unit is earlier than the third time unit. It may be understood as that the terminal device first detects the WUS, and then starts (or restarts) the drx-onDurationTimer.

There is an interval of second duration between the first time unit and the third time unit.

The second duration indicates a length of enabling time period of the main circuit of the terminal device. For the second duration, refer to the descriptions of the first duration in Example 1. Details are not described herein again.

Optionally, in Example 2, the third time unit is a time unit in which an on duration start position is located in the DRX cycle. It may be understood as that the terminal device always starts (or restarts) the drx-onDurationTimer at the on duration start position. Correspondingly, the network device (for example, a base station) sends the WUS before the second duration that is before the on duration start position.

Optionally, in Example 2, the third time unit may not be the time unit in which the on duration start position is located in the DRX cycle. It may be understood as that, if detecting the WUS, the terminal device starts (or restarts) the drx-onDurationTimer after the second duration that is after the WUS is received. A time unit in which the drx-onDurationTimer is started (or restarted) may not be the time unit in which the on duration start position is located.

It is easy to understand that, in Example 2, if receiving, in the running time of the drx-onDurationTimer, no PDCCH indicating new transmission, the terminal device determines, when running of the drx-onDurationTimer expires, that the active time ends. Otherwise, if receiving, in the running time of the drx-onDurationTimer, the PDCCH indicating new transmission, the terminal device starts (or restarts) the drx-InactivityTimer. The terminal device continues monitoring and receiving the PDCCH in running time of the drx-InactivityTimer. The related DRX mechanism is not described herein again.

Example 3: The started (or restarted) first timers are the drx-InactivityTimer and the drx-onDurationTimer. Correspondingly, the active time of the terminal device includes a larger value in running time of the drx-InactivityTimer and running time of the drx-onDurationTimer.

In this case, if the terminal device detects the WUS, the following step is performed.

If detecting the WUS, the terminal device starts (or restarts) the inactivity timer drx-InactivityTimer, and starts (or restarts) the on duration timer drx-onDurationTimer. For details, refer to the descriptions of S511 and S512. The details are not described herein again.

The foregoing describes the started (or restarted) first timer by using Example 1 to Example 3. Correspondingly, in a running period of the first timer means being in the active time of the terminal device.

Optionally, for the terminal device, after detecting the WUS, the terminal device performs S504.

S504: The terminal device switches from the first link to the second link.

For example, that the terminal device switches from the first link to the second link may be understood as that a communication link between the terminal device and the network device is changed from the first link to the second link.

In a possible implementation, S504 includes: The terminal device controls the first link to stop operating, and enables/activates the second link to operate.

FIG. 2 is used as an example. The first link is the WUR link, and the second link is the main link. After performing S504, the terminal device does not operate on the WUR link, but operates on an NR main link.

It should be understood that, in this implementation, the terminal device first performs S502, then performs S504, and next performs S503.

In this way, in a period in which the PDCCH is monitored over the second link, the WUS is no longer monitored over the first link, to reduce power consumption of the terminal device.

In another possible implementation, S504 includes: The terminal device keeps operating of the first link, and enables/activates the second link to operate.

FIG. 2 is used as an example. The first link is the WUR link, and the second link is the main link. After performing S504, the terminal device operates on both the WUR link and the NR main link.

It should be understood that, in this implementation, the terminal device first performs S502, then performs S504, and next performs S503. In addition, when performing S503 and S504, the terminal device still performs S502.

In this way, in a period in which the PDCCH is monitored over the second link, the WUS is still monitored over the first link, to prevent the terminal device from frequently enabling or disabling the first link, so as to simplify processing of the terminal device.

Correspondingly, for the network device, the network device determines that the terminal device switches from the first link to the second link.

For example, for the network device, after performing S502, the network device considers that the terminal device switches from the first link to the second link. Then, the network device sends the PDCCH to the terminal device over the second link. For details, refer to the descriptions of S503. The details are not described herein again.

Optionally, after performing S503, the terminal device performs S505.

S505: If the active time of the terminal device ends, the terminal device switches from the second link to the first link.

For the active time of the terminal device, refer to the descriptions of S503.

That the active time of the terminal device ends may be understood as that the terminal device enters the inactive time of the terminal device. That is, the inactive time of the terminal device is started. The network device sends the WUS to the terminal device over the first link in the inactive time of the terminal device. Correspondingly, the terminal device monitors the WUS from the network device over the first link. For details, refer to the descriptions of S502. In this way, the power consumption of the terminal device is reduced.

For example, that the active time of the terminal device ends may include the following two manners.

Manner 1 (an explicit manner): The network device sends indication information A to the terminal device over the second link. Correspondingly, the terminal device receives the indication information A from the network device over the second link.

The indication information A indicates that the active time of the terminal device ends.

The indication information A may be transmitted through the PDCCH, a PDSCH, or another channel. This is not limited in embodiments of this application.

The indication information A may be sent by using DCI, or may be sent by using a medium access control control element (medium access control control element, MAC CE).

The indication information A indicates one of the following.

In a first item, the terminal device stops the first timer. For the first timer, refer to the descriptions of S503. Details are not described herein again. There may be one or more first timers. That the terminal device stops the first timer may be understood as that the indication information A indicates the terminal device to stop each timer in the first timer. In other words, when each timer in the first timer stops running, it is considered that the active time of the terminal device ends.

In a second item, the terminal device switches from the first link to the second link to operate.

For example, when determining that there is no downlink data in short time, the network device (for example, a base station) may send the indication information A to the terminal device.

Manner 2 (an implicit manner): Running of the first timer expires.

There may be one or more first timers. That the first timer expires may be understood as that each timer in the first timer expires. In other words, when each timer in the first timer expires, it is considered that the active time of the terminal device ends.

Switching from the second link to the first link may be understood as that the communication link between the terminal device and the network device is changed from the second link to the first link.

For example, S505 includes: The terminal device controls the second link to stop operating, and enables/activates the first link to operate.

FIG. 2 is used as an example. The first link is the WUR link, and the second link is the main link. After the terminal device performs S505, the main link of the terminal device does not operate, but the terminal device operates on the WUR link.

Correspondingly, for the network device, if the active time of the terminal device ends, the network device determines that the terminal device switches from the second link to the first link.

The network device can learn of the active time of the terminal device and can learn that the active time of the terminal device ends.

For example, in Manner 1 (the explicit manner), the network device determines that the active time of the terminal device ends, and then indicates, to the terminal device, that the active time ends.

For another example, in Manner 2 (the implicit manner), the network device can obtain a running parameter of the first timer, and further learn that the active time of the terminal device ends.

For the terminal device, if the active time of the terminal device ends, the network device considers that the terminal device switches from the second link to the first link.

Then, the network device sends the WUS to the terminal device over the first link. For details, refer to the descriptions of S502. The details are not described herein again.

In some embodiments, as shown in FIG. 10, after performing S504, the terminal device further performs S521.

S521: If the terminal device determines to switch from the second link to the first link and then switch from the first link back to the second link, and duration of remaining on the first link is less than or equal to a second threshold, the terminal device no longer switches from the second link to the first link, and still operates on the second link.

The second threshold indicates a length of an enabling time period of the wake up circuit of the terminal device.

It is easy to understand that, because the main link of the terminal device enters the operating state from the sleep state, enabling of the wake up circuit takes a specific enabling time period, and the wake up circuit can be in an operating state only after the enabling time period. The terminal devices have different capability strength. Correspondingly, the enabling time periods are also different.

For example, a process of determining the second threshold is as follows.

For example, the terminal device sends capability information 2 to the network device (for example, a base station). Correspondingly, the network device receives the capability information 2 from the terminal device.

The capability information 2 indicates a capability of the terminal device. For example, the capability of the terminal device includes the length of the enabling time period of the wake up circuit.

For the network device, the network device uses a time length indicated by the capability information 2 as the second threshold. In other words, the capability information 2 includes the second threshold.

Specifically, the time length indicated by the capability information 2 is 20 ms, and the second threshold is 20 ms.

For another example, the terminal device sends capability information 2 to the network device (for example, a base station). Correspondingly, the network device receives the capability information 2 from the terminal device.

The capability information 2 indicates a capability of the terminal device. For example, the capability of the terminal device includes the length of the enabling time period of the wake up circuit.

For the network device, the network device configures the second threshold based on a time length indicated by the capability information 2.

The time length indicated by the capability information 2 may be the same as or different from the second threshold configured by the network device. Specifically, the time length indicated by the capability information 2 is 20 ms, and the network device configures the second threshold as 20 ms, or the network device configures the second threshold as 21 ms.

For still another example, the second threshold is predefined in the protocol.

Specifically, the second threshold is a maximum value in enabling time periods of the wake up circuit under various capabilities of the terminal devices. In other words, all the terminal devices in the communication system can successfully enable wake up circuits after the second threshold.

The duration of the terminal device remaining on the first link is estimated by the terminal device.

For example, an estimation process in which the terminal device estimates the duration of remaining on the first link is as follows.

For example, an uplink hybrid automatic repeat request round trip time timer drx-HARQ-RTT-TimerUL is used as an example. Because the drx-HARQ-RTT-TimerUL is running, the terminal device enters short inactive time. The terminal device estimates, based on running duration of the drx-HARQ-RTT-TimerUL, the duration of the terminal device remaining on the first link. For example, the duration of the terminal device remaining on the first link is the running duration of the drx-HARQ-RTT-TimerUL.

In this case, if the running duration of the drx-HARQ-RTT-TimerUL is less than the second threshold, the terminal device does not switch to the first link (namely, the WUR link), and still operates on the second link (namely, the main link).

For another example, a downlink hybrid automatic repeat request round trip time timer drx-HARQ-RTT-TimerDL is used as an example. Because the drx-HARQ-RTT-TimerDL is running, the terminal device enters short inactive time. The terminal device estimates, based on running duration of the drx-HARQ-RTT-TimerDL, the duration of the terminal device remaining on the first link. For example, the duration of the terminal device remaining on the first link is the running duration of the drx-HARQ-RTT-TimerDL.

In this case, if the running duration of the drx-HARQ-RTT-TimerDL is less than the second threshold, the terminal device does not switch to the first link (namely, the WUR link), and still operates on the second link (namely, the main link).

In a possible implementation, the following content is predefined.

In running time of the drx-HARQ-RTT-TimerUL and/or the drx-HARQ-RTT-TimerDL, the terminal device does not switch to the first link (that is, the WUR link), but still operates on the second link (that is, the main link).

It should be understood that, if the duration of remaining on the first link is greater than the second threshold, or the terminal device cannot determine the duration of remaining on the first link, the terminal device switches from the second link to the first link, that is, performs link switching.

In other words, if the terminal device determines that the duration of remaining on the first link is excessively short, the terminal device does not perform link switching, and still operates on the second link, to achieve good communication performance.

Correspondingly, for the network device, if it is determined that the terminal device is to switch from the second link to the first link, and then is to switch from the first link back to the second link, and the duration of remaining on the first link is less than or equal to the second threshold, the network device determines that the terminal device no longer switches from the second link to the first link and the terminal device still operates on the second link.

For a process of determining the duration of the terminal device remaining on the first link, refer to the descriptions on the terminal device side. Details are not described herein again.

Then, if the network device needs to send downlink information to the terminal device, the network device sends the downlink information to the terminal device over the second link. This simplifies complexity of link switching on the terminal device side, and can ensure that the terminal device successfully receives the downlink information.

The foregoing uses a downlink scenario as an example for description.

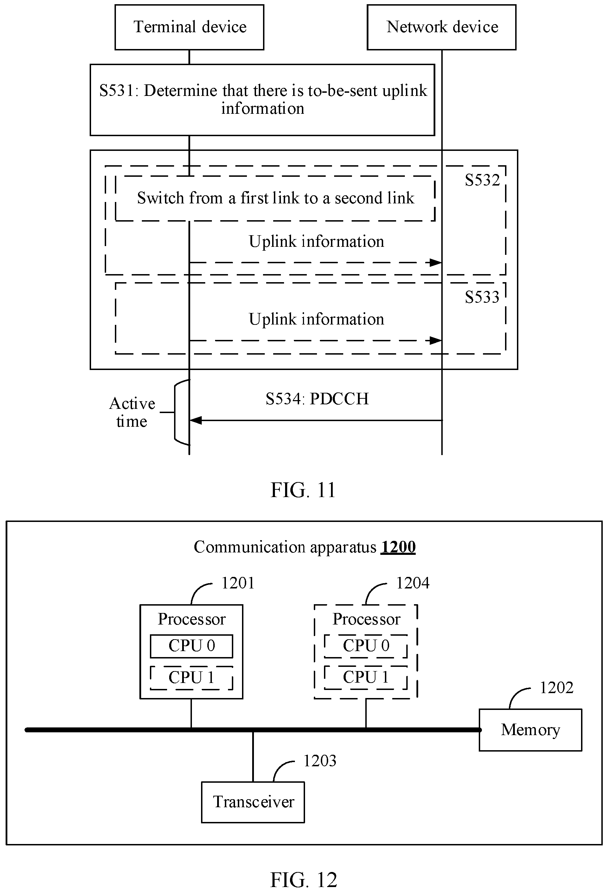

The following uses an uplink scenario as an example for description. In a scenario of downlink reception caused by uplink sending, the terminal device also needs to operate on the second link to monitor the PDCCH. As shown in FIG. 11, the terminal device performs S531 and S532.

S531: The terminal device determines that there is to-be-sent uplink information.

For example, the uplink information includes information sent by the terminal device to the network device.

For example, the uplink information includes a random access preamble (Preamble) sent by the terminal device on a random access channel (random access channel, RACH).

For another example, the uplink information includes information sent by the terminal device on a physical uplink control channel (physical uplink control channel, PUCCH), for example, physical uplink control information (uplink control information, UCI).

For another example, the uplink information includes information sent by the terminal device on a physical uplink shared channel (physical uplink shared channel, PUSCH), for example, service data.

For the terminal device, after performing S531, the terminal device performs S532 if the terminal device operates on the first link and the second link does not operate. After performing S531, the terminal device performs S533 if operating on the second link. S532 and S533 are described as follows.

S532: The terminal device switches from the first link to the second link, and sends the uplink information to the network device over the second link. Correspondingly, the network device switches from the first link to the second link, and receives the uplink information from the terminal device over the second link.

For switching from the first link to the second link, refer to the descriptions of S504. Details are not described herein again.

For sending the uplink information over the second link, refer to a related technology. Details are not described herein.

For example, the terminal device has performed S505. Correspondingly, the terminal device has operated on the first link, and the second link does not operate. If the terminal device needs to send the uplink information, the terminal device performs S532.

In other words, if the terminal device operates on the first link and the second link does not operate, when the terminal device needs to send the uplink information, the terminal device may perform link switching, to switch to the second link, and then send the uplink information over the second link, to implement an uplink information sending function.

S533: The terminal device sends the uplink information to the network device over the second link. Correspondingly, the network device receives the uplink information from the terminal device over the second link.

For sending the uplink information over the second link, refer to a related technology. Details are not described herein.

For example, the terminal device has performed S504. Correspondingly, the terminal device has operated on the second link. If the terminal device needs to send the uplink information, the terminal device performs S533.

In other words, if the terminal device operates on the second link, when the terminal device needs to send the uplink information, the terminal device only needs to send the uplink information over the second link, to implement an uplink information sending function.

It is easy to understand that, after the uplink information includes the random access preamble, and the uplink information is sent over the second link (that is, after S532 or S533 is performed), the terminal device further performs S534.

S534: The network device sends the PDCCH to the terminal device over the second link in the active time of the terminal device. Correspondingly, the terminal device monitors the PDCCH from the network device over the second link.

When the uplink information includes the random access preamble, the active time of the terminal device further includes a time period corresponding to a random access response window ra-ResponseWindow, so that the terminal device monitors a random access response (random access response, RAR) carried on the PDCCH, to complete random access.

In other words, if the random access response window ra-ResponseWindow is running, it is considered that the terminal device is in the DRX active time. The terminal device operates on the second link, and monitors the PDCCH over the second link.

For an implementation process of S534, refer to the descriptions of S503. Details are not described herein again.

It should be understood that, when the DRX mechanism is used, a MAC entity of the terminal device should also (if operating on the first link, the terminal device switches to the second link) monitor the PDCCH based on requirements in another chapter of the protocol (When using DRX operation, the MAC entity shall also (if in WUR, switch to NR main radio) monitor PDCCH according to requirements found in other clauses of this specification).

In embodiments of this application, "if..." may alternatively be replaced with other descriptions, for example, "when... ", "in this case...". The foregoing three descriptions have a same meaning, and the three descriptions are interchangeable with each other.

The foregoing mainly describes the solutions provided in embodiments of this application from a perspective of interaction between network elements. Correspondingly, an embodiment of this application further provides a communication apparatus. The communication apparatus may be the network element in the foregoing method embodiments, an apparatus including the foregoing network element, or a component that can be used in the network element. It may be understood that, to implement the foregoing functions, the communication apparatus includes corresponding hardware structures and/or software modules for performing the functions. A person skilled in the art should be easily aware that, in combination with the examples described in embodiments disclosed in this specification, units and algorithm steps can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, FIG. 12 is a diagram of a structure of a communication apparatus according to an embodiment of this application.

The communication apparatus may be a terminal device, or may be a chip (system) or another part or component that can be disposed in the terminal device.

Alternatively, the communication apparatus may be a network device, or may be a chip (system) or another part or component that can be disposed in the network device.

As shown in FIG. 12, a communication apparatus 1200 may include a processor 1201. Optionally, the communication apparatus 1200 may further include a memory 1202 and/or a transceiver 1203. The processor 1201 is coupled to the memory 1202 and the transceiver 1203. For example, the processor 1201 may be connected to the memory 1202 and the transceiver 1203 via a communication bus.

The following describes each component of the communication apparatus 1200 in detail with reference to FIG. 12.

The processor 1201 is a control center of the communication apparatus 1200, and may be one processor or may be a collective term of a plurality of processing elements. For example, the processor 1201 is one or more central processing units (central processing units, CPUs), or an application-specific integrated circuit (application-specific integrated circuit, ASIC), or is configured as one or more integrated circuits implementing embodiments of this application, for example, one or more digital signal processors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and invoking data stored in the memory 1202.

During specific implementation, in an embodiment, the processor 1201 may include one or more CPUs, for example, a CPU 0 and a CPU 1 shown in FIG. 12.

During specific implementation, in an embodiment, the communication apparatus 1200 may alternatively include a plurality of processors, for example, the processor 1201 and a processor 1204 shown in FIG. 12. Each of the processors may be a single-core processor (single-CPU) or may be a multi-core processor (multi-CPU). The processor herein may be one or more devices, circuits, and/or processing cores configured to process data (for example, computer program instructions).

The memory 1202 is configured to store a software program for executing the solutions of this application, and the processor 1201 controls execution. For a specific implementation, refer to the foregoing method embodiments, and details are not described herein again.

Optionally, the memory 1202 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of instructions or a data structure and that can be accessed by a computer. However, this is not limited thereto. The memory 1202 may be integrated with the processor 1201, or may exist independently, and is coupled to the processor 1201 using an interface circuit (not shown in FIG. 12) of the communication apparatus 1200. This is not specifically limited in embodiments of this application.

The transceiver 1203 is configured to communicate with another communication apparatus.

For example, the communication apparatus 1200 is a terminal device, and the transceiver 1203 may be configured to communicate with a network device.

For another example, the communication apparatus 1200 is a network device, and the transceiver 1203 may be configured to communicate with a terminal device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 using an interface circuit (not shown in FIG. 12) of the communication apparatus 1200. This is not specifically limited in embodiments of this application.

It is easy to understand that the structure of the communication apparatus 1200 shown in FIG. 12 does not constitute a limitation on the communication apparatus. An actual communication apparatus may include more or fewer components than those shown in the figure, or combine some components, or have different component arrangement.

In addition, for technical effects of the communication apparatus 1200, refer to technical effects of the method in the foregoing method embodiments. Details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, an embodiment of this application further provides a computer program product that carries computer instructions. When the computer instructions are run on a computer, the computer is enabled to perform the method described in the foregoing embodiments.

Optionally, an embodiment of this application further provides a computer-readable storage medium. The computer-readable storage medium stores computer instructions. When the computer instructions are run on a computer, the computer is enabled to perform the method described in the foregoing embodiments.

Optionally, an embodiment of this application further provides a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in a corresponding method.

All or some of the foregoing embodiments may be implemented by software, hardware (for example, a circuit), firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. A and B may be singular or plural. In addition, the character "/" in this specification usually indicates an "or" relationship between the associated objects, or may indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a communication device, or the like) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, wherein the terminal device is in a radio resource control RRC connected state, and the method comprises:
monitoring a wake up signal WUS from a network device over a first link in inactive time of the terminal device; and
if the WUS is detected,
monitoring a physical downlink control channel PDCCH from the network device over a second link in active time of the terminal device, wherein
power consumption of the terminal device operating on the first link is less than power consumption of the terminal device operating on the second link.

2. The method according to claim 1, wherein if the WUS is detected, before monitoring the PDCCH from the network device over the second link, the method further comprises:
switching from the first link to the second link.

3. The method according to claim 1 or 2, wherein the method further comprises:
if the active time of the terminal device ends, switching from the second link to the first link.

4. The method according to any one of claims 1 to 3, wherein the method further comprises:
if the WUS is detected, starting or restarting a first timer, wherein
the active time of the terminal device comprises running time of the first timer, and the first timer comprises an inactivity timer or an on duration timer.

5. The method according to claim 4, wherein the first timer comprises the inactivity timer, and starting or restarting the first timer comprises:
if the WUS is detected in a first time unit, starting or restarting the inactivity timer in a second time unit, wherein
the first time unit is earlier than the second time unit, and the second time unit meets one of the following:
there is an interval of first duration between the second time unit and the first time unit;
the second time unit is an initial time unit after the first time unit;
the second time unit is an initial time unit that is indicated by a preconfigured index and that is after the first time unit; or
the second time unit is a time unit indicated by the WUS.

6. The method according to claim 4, wherein the first timer comprises the on duration timer, and starting or restarting the first timer comprises:
if the WUS is detected in a first time unit, starting or restarting the on duration timer in a third time unit, wherein the first time unit is earlier than the third time unit, and there is an interval of second duration between the third time unit and the first time unit.

7. The method according to claim 6, wherein the third time unit is a time unit in which an on duration start position is located in a discontinuous reception DRX cycle.

8. The method according to any one of claims 1 to 7, wherein
the active time of the terminal device comprises a time period corresponding to a random access response window ra-ResponseWindow.

9. The method according to any one of claims 1 to 8, wherein monitoring the WUS from the network device over the first link comprises:
if a signal quality measurement result of a first signal is greater than or equal to a first threshold, monitoring the WUS from the network device over the first link, wherein the signal quality measurement result comprises a result of signal quality measurement performed on the first signal over the first link or the second link.

10. The method according to any one of claims 1 to 9, wherein after monitoring the PDCCH from the network device over the second link, the method further comprises:
if it is determined that switching from the second link to the first link is to be performed, and then switching from the first link back to the second link is to be performed, and duration of remaining on the first link is less than or equal to a second threshold, no longer switching from the second link to the first link, and still operating on the second link.

11. The method according to any one of claims 4 to 7, wherein before monitoring the WUS from the network device over the first link, the method further comprises:
receiving WUS configuration information from the network device, wherein the WUS configuration information indicates the terminal device to monitor the WUS over the first link.

12. The method according to claim 11, wherein monitoring the WUS from the network device over the first link comprises:
if a first condition is met, monitoring the WUS from the network device over the first link, wherein
the first condition comprises: discontinuous reception DRX configuration information and the WUS configuration information from the network device are received.

13. The method according to claim 12, wherein after the DRX configuration information from the network device is received, and before monitoring the WUS from the network device over the first link,
if it is detected that the WUS is used to start or restart the inactivity timer, the method further comprises:
ignoring a first configuration, or determining that the first configuration is invalid, wherein
the first configuration is comprised in a configuration indicated by the DRX configuration information to the terminal device, and the first configuration comprises at least one of the following: the DRX cycle or running duration of the on duration timer.

14. The method according to any one of claims 11 to 13, wherein
monitoring the WUS from the network device over the first link comprises:
if a second condition is met, monitoring the WUS from the network device over the first link, wherein
the second condition comprises the following two items:
downlink control information with cyclic redundancy code scrambled by power saving radio network temporary identifier DCP configuration information and the WUS configuration information from the network device are received, wherein the DCP configuration information indicates a DCP configuration to the terminal device, and the WUS configuration information indicates a WUS configuration to the terminal device; and
a priority of the DCP configuration is lower than a priority of the WUS configuration.

15. The method according to any one of claims 11 to 13, wherein the method further comprises:
receiving DCP configuration information from the network device over the second link, wherein
the DCP configuration information is used to monitor DCP over the second link, the DCP is used to wake up the terminal device, and the WUS is used to wake up a terminal device group to which the terminal device belongs.

16. The method according to claim 15, wherein
if the WUS is detected, after it is determined that switching from the first link to the second link is performed, and before starting or restarting the first timer, the method further comprises:
monitoring, based on the DCP configuration information, the DCP over the second link.

17. The method according to claim 3, wherein after switching from the second link to the first link, the method comprises:
switching from the first link to the second link, and sending uplink information over the second link.

18. A communication method, applied to a network device, wherein the method comprises:
sending a wake up signal WUS to a terminal device over a first link in inactive time of the terminal device; and
sending a physical downlink control channel PDCCH to the terminal device over a second link in active time of the terminal device, wherein
the terminal device is in a radio resource control RRC connected state, and power consumption of the terminal device operating on the first link is less than power consumption of the terminal device operating on the second link.

19. The method according to claim 18, wherein after sending the WUS to the terminal device over the first link, and before sending the PDCCH to the terminal device over the second link, the method further comprises:
determining that the terminal device switches from the first link to the second link.

20. The method according to claim 18 or 19, wherein the method further comprises:
if the active time of the terminal device ends, determining that the terminal device switches from the second link to the first link.

21. The method according to any one of claims 18 to 20, wherein
the active time of the terminal device comprises a time period corresponding to a random access response window ra-ResponseWindow.

22. The method according to any one of claims 18 to 21, wherein after sending the PDCCH to the terminal device over the second link, the method further comprises:
if it is determined that the terminal device is to switch from the second link to the first link, and then is to switch from the first link back to the second link, and duration of remaining on the first link is less than or equal to a second threshold, determining that the terminal device no longer switches from the second link to the first link, and that the terminal device still operates on the second link.

23. The method according to any one of claims 18 to 22, wherein before sending the WUS to the terminal device over the first link, the method further comprises:
sending WUS configuration information to the terminal device, wherein the WUS configuration information is used by the terminal device to monitor the WUS.

24. The method according to claim 23, wherein the method further comprises:
sending downlink control information with cyclic redundancy code scrambled by power saving radio network temporary identifier DCP configuration information to the terminal device over the second link, wherein
the DCP configuration information indicates a DCP configuration to the terminal device, the WUS configuration information indicates a WUS configuration to the terminal device, and a priority of the DCP configuration is lower than a priority of the WUS configuration.

25. The method according to claim 23, wherein the method further comprises:
sending DCP configuration information to the terminal device over the second link, wherein
the DCP configuration information is used by the terminal device to monitor DCP; and
the DCP is used to wake up the terminal device, and the WUS is used to wake up a terminal device group to which the terminal device belongs.

26. A terminal device, comprising a processor and a memory, wherein the processor is coupled to the memory, the memory stores program instructions, and when the program instructions stored in the memory are executed by the processor, the terminal device is enabled to perform the method according to any one of claims 1 to 17.

27. A network device, comprising a processor and a memory, wherein the processor is coupled to the memory, the memory stores program instructions, and when the program instructions stored in the memory are executed by the processor, the network device is enabled to perform the method according to any one of claims 18 to 25.

28. A chip, comprising a processor and a memory coupled to the processor, wherein the memory stores a computer program, the chip is located in a terminal device, and when the processor executes the computer program, the terminal device is enabled to perform the method according to any one of claims 1 to 17.

29. A chip, comprising a processor and a memory coupled to the processor, wherein the memory stores a computer program, the chip is located in a network device, and when the processor executes the computer program, the network device is enabled to perform the method according to any one of claims 18 to 25.

30. A computer-readable storage medium, storing a computer program or instructions, wherein when the computer program or the instructions are executed on a terminal device, the terminal device is enabled to perform the method according to any one of claims 1 to 17.

31. A computer-readable storage medium, storing a computer program or instructions, wherein when the computer program or the instructions are executed on a network device, the network device is enabled to perform the method according to any one of claims 18 to 25.
